Europäisches Patentamt

European Patent Office

Office européen des brevets

(19)

(11) Publication number: 0 190 922
A2

# (12) EUROPEAN PATENT APPLICATION

(21) Application number: 86300753.0

(22) Date of filing: 05.02.86

(51) Int. Cl.⁴: G 01 M 11/00
G 02 B 6/28

(30) Priority: 07.02.85 US 699409

(43) Date of publication of application:
13.08.86 Bulletin 86/33

(84) Designated Contracting States:
AT BE CH DE FR GB IT LI LU NL SE

(71) Applicant: THE BOARD OF TRUSTEES OF THE LELAND
STANFORD JUNIOR UNIVERSITY

Stanford, CA 94305(US)

(72) Inventor: Carrara, Sidney L. A.
59A Escondido Village
Stanford California 94305(US)

(72) Inventor: Kim, Byoung Yoon
48C Escondido Village
Stanford California 94305(US)

(72) Inventor: Shaw, Herbert John
719 Alvarado Row
Stanford California 94305(US)

(74) Representative: Rushton, Ronald et al,
SOMMERVILLE & RUSHTON 11 Holywell Hill
St. Albans Hertfordshire AL1 1EZ(GB)

(54) Apparatus and method for determining the orientation of axes of birefringence in an optical fiber.

(57) An apparauts and process for accurate alignment of the birefrigent axes of circular fibers, and differentiation between the fast and slow axes utilizing an externally induced stress birefringence to change the orientation and magnitude of the natural fiber birefringence at a selected point along the length of the fiber (24) is disclosed. The apparatus comprises a light source (60) for supplying polarized light to the fiber (24), means (66, 68) for inducing stress to the fiber at that point in a variable direction and means (78) for monitoring the effect on the light as that direction is varied. A measurement of coupling from one polarization mode of the fiber to the othe as the axis of induced stress is changed provides an accurate determination of the lacation of the birefringent axes of the fiber (24).

Fig. 4

EP 0 190 922 A2

## APPARATUS AND METHOD FOR DETERMINING THE ORIENTATION
## OF AXES OF BIREFRINGENCE IN AN OPTICAL FIBER

### Background of the Invention

This invention relates generally to the field of optical fibers and in particular highly birefringent fibers. Specifically, the invention relates to the accurate location and alignment of the polarization axes of such fibers.

Highly birefringent fibers for maintaining the polarization of light are finding increasing application, especially in interferometric sensor applications where polarization stability of the guided wave is required. Accordingly, a variety of fiber optic devices such as directional couplers and polarizers have been developed for use with highly birefringent fiber. In constructing these devices, accurate location and alignment of the birefringent axes of the fiber at selected points along the length of the fiber becomes important. Such location and alignment is simple to achieve when the highly birefringent fiber has a unique exterior shape such as in D - or square shaped fibers. The location and alignment problem has not been adequately solved, however, where the birefringent fiber has a circular cross section and thus does not lend itself to easy visual examination.

### Summary of the Invention

According to the invention there is provided an apparatus for locating the birefringent axes of an optical fiber comprising a light source for introducing light of a first polarization into said fiber; means for applying a lateral stress at a point along the length of said fiber where the axes are to be located; means for changing the direction of the lateral stress; and means for monitoring the effect of the stress as a function of the changing direction to identify the direction of at least one of the birefringent axes and thereby the location of said birefringent axes. Preferably a pair of relatively moveable surfaces are positioned across that point of the fiber for pressing against the fiber to stress it in a direction substantially perpendicular to its longitudinal axis.

The invention also provides a method of locating the birefringent axes of an optical fiber comprising introducing light at a first location of the fiber and at a first polarization; laterally stressing the fiber; monitoring the light at a second location along the fiber and at a second polarization; rotating the direction of the lateral stressing; and repeating these steps to locate a direction of lateral stress which provides a predetermined amount of monitored light. Preferably that amount of light is a minimum amount.

The present invention utilizes the fact that a birefringent fiber, under lateral stress, provides a localized birefringence in the stressed area which is a combination of the residual or natural birefringence of the fiber at that point and the externally induced birefringence due to the stress. The present invention locates the birefringent axes in circular fibers within less than one degree of rotation about the axis of the fiber. This is accomplished by laterally stressing the fiber and rotating the direction of lateral stress around the axis of the fiber. The applied stress is localized at a single point along the length of the fiber. One end of the fiber is illuminated in a single polarization mode during the application of the rotating stress. The application of stress will cause coupling of some of the optical power from one of the eigen polarization modes of the fiber to the other, unless the direction of externally applied stress is along one of the birefringent axes. Thus, if the light at the stressed region is linearly polarized along the axis of applied stress, or at a right angle thereto, the polarization state of light within the fiber will not be altered.

The light output from the fiber is passed through a linear polarizer which is orthogonal to the input polarization at which the fiber was illuminated. The output of this orthogonal polarizer is detected and measured to provide a measure of the light which is coupled from one polarization mode to the other as a function of the direction of applied stress. The light measured at the output and thus coupled at the point of applied stress will be virtually zero if one of the residual or natural birefringence axes of the fiber is aligned with the direction of applied stress. Thus, the output of the system, as the axis of applied stress is rotated, will provide two minima at the natural birefringence axes of the fiber. Furthermore, the modal coupling as these axes are approached is different for the fast and slow axes (which axes are defined hereinafter) of the fiber, and thus, the minimum which occurs at the slow axis is much sharper than the minimum which occurs at the fast axis. This permits an accurate identification and alignment of each of the particular polarization axes of the fiber.

## Brief Description of the Drawings

Figure 1 is a cross section of a typical birefringent fiber illustrating the axes of birefringence.

Figures 2(a)-2(e) schematically illustrate the stressed regions in a fiber and the amount of power in the polarization modes at various points along the fiber.

Figure 3 shows the effect on the axes of polarization in a birefringent fiber when a stress is applied to a fiber.

Figure 4 is a schematic illustration of the apparatus used in the present invention to locate and identify the birefringent axes in a circular fiber.

Figure 5 is a graph of coupled power versus the direction of applied force for the apparatus of Figure 4.

## Detailed Description of the Preferred

## Embodiment of the Invention

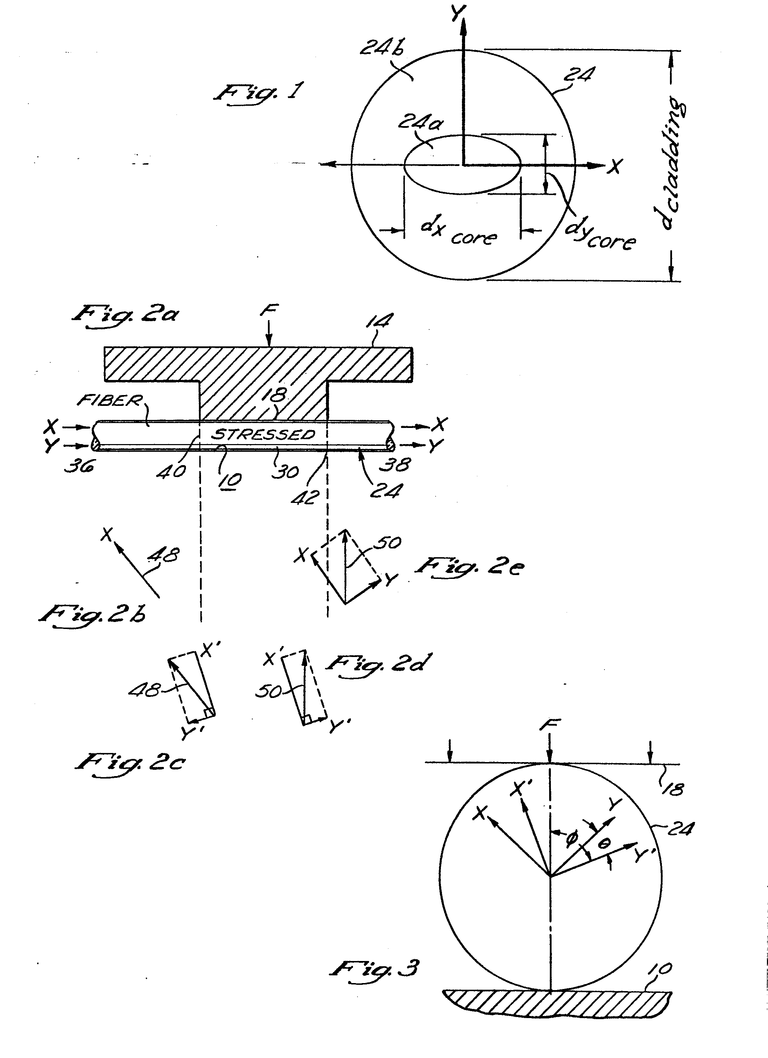

Referring initially to Figure 1, there is shown a sectional view taken normal to the longitudinal axis of a typical birefringent fiber 24, which produces birefringence through an elliptical core geometry. Those skilled in the art will recognize that the fiber shown in Figure 1 is only exemplary. The present invention will work equally well for other types of birefringent fiber where, for example, the birefringence is induced through stresses built into the fiber at the time of its manufacture. In such cases, the core of the fiber may be circular rather than elliptical.

The fiber 24 has an elliptical core 24a surrounded by a substantially circular cladding 24b which can have a diameter, $d_{cladding}$, on the order of 50-100 micrometers. The elliptical core has two principal axes, the X, or horizontal, axis and the Y, or vertical, axis. As a result of the non-circular core geometry, the fiber exhibits different refractive indices to light propagating along each of the two principal axes. As used herein, the Y-axis, having a shorter length, $d_{y-core}$, and a lower refractive index propagates light at a higher velocity than the X-axis, having a longer length, $d_{x-core}$; therefore, the Y-axis will be referred to as the "fast axis," and the X-axis will be referred to as the "slow axis."

The birefringent fiber 24 supports two orthogonally polarized modes. The directions of linear polarization of these modes are the principal axes of the fiber 24 as set forth above. These linearly polarized modes are "normal" modes of the fiber; that is, they propagate through the fiber 24, unaltered except in phase. Optical signals may comprise a combination of the two modes. For example, light linearly polarized at 45° to the principal axes will consist of equal amounts of both modes initially in phase. As the two modes propagate down the fiber 24, they will accumulate a phase difference because their propagation constants differ. The distance required for $2\pi$ of phase difference to accumulate is called the "beat length" of the fiber and is given as $L=\lambda/\Delta n$, where $\lambda$ is the optical wavelength and $\Delta n$ is the difference in the refractive indices for the two polarizations. After traveling one half of a beat length, the two components will be separated by 180 degrees or $\pi$ radians.

Birefringent fiber, such as the elliptical core fiber 24, which is shown in the example of Figure 1, is commercially available from Andrew Corporation, 10500 West 153rd Street, Orland Park, Illinois 60462. The metal coating and/or plastic jacket normally covering the fiber are preferably removed before using the fiber in the devices described herein. Other birefringent fibers are calibrated using this invention in the same manner as is taught with reference to the fiber of Figure 1.

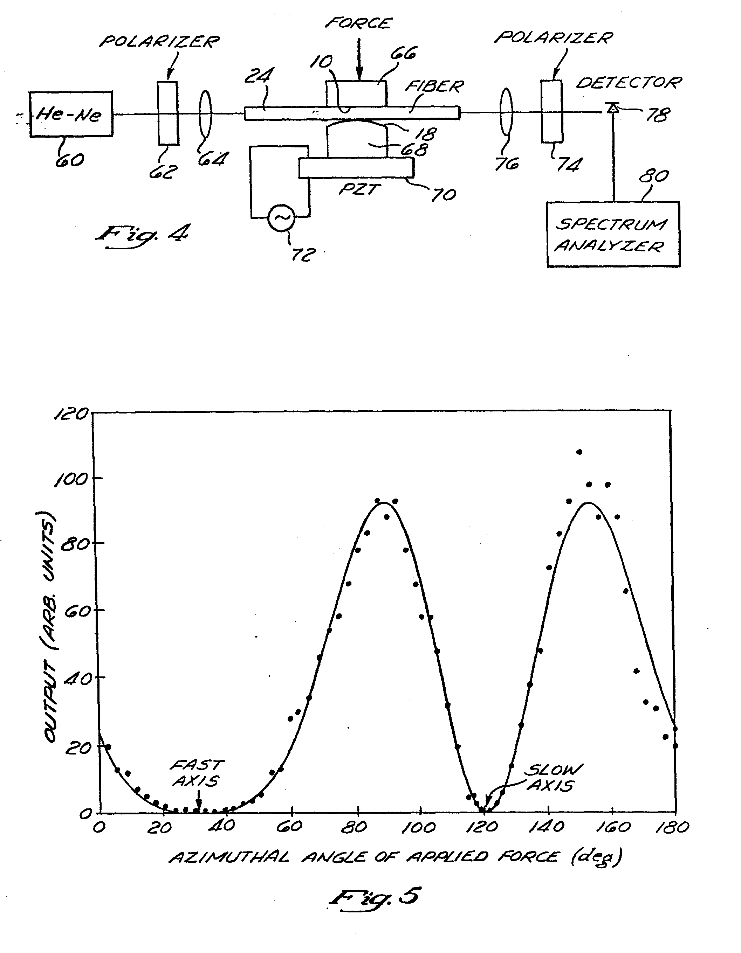

Referring to Figures 2(a)-2(e), there is shown a diagram of a stress region in the fiber 24 when a block 14 is pressed down with a total force F, so that the fiber 24 is squeezed between a surface 18 and a surface 10. Also shown in Figures 2(b)-2(e) are vector diagrams of the amount of optical power in each of the axes of birefringence, i.e., polarization modes, at various points along the fiber. It is important to note that Figures 2(a) - 2(e) are diagrammatic only - that is, they are used to describe the theory underlying the present invention, rather than the details of the apparatus which are shown in Figure 4.

Referring to Figure 3, there is shown a diagram of how the axes of birefringence of the fiber 24 are changed by the application of stress. Those skilled in the art will understand that a single mode birefringent fiber, such as the fiber 24, has two orthogonal axes of polarization which correspond to the two orthogonal polarization modes of a single mode fiber.

Figure 2(a) shows three regions of alternating stress and no stress caused by the surface 18. The stressed region 30 is assumed, for this illustration to be one-half beat length long. In the actual implementation of the present invention (Figure 4), the stressed region is not necessarily one-half beat length long. This length in Figure 2(a) is used for explanatory purposes only. The fiber 24 can be thought of as a four-port device analogous to a directional coupler coupling dissimilar waveguides. For example, the two orthogonal X and Y polarization modes of the fiber 24, shown schematically at 36, are analogous to the two input ports of such a directional coupler. Similarly, the X and Y orthogonal polarization modes, shown schematically at 38, are analogous to the output ports of such a directional coupler.

When stress is applied to the fiber 24, as represented by the force F in Figures 2(a) and 3 pushing the surface 18 against the birefringent fiber 24, at an angle $\phi$ relative to the Y axis, the orthogonal axes of polarization X and Y (which correspond to the polarization modes X and Y) abruptly shift through an angle $\theta$ to orthogonal axes of polarization X' and Y'.

It is important to the operation of this coupler device that abrupt changes in the orientation of the polarization mode axes be caused so that such changes in orientation occur over a very short boundary region. If the change in orientation is due to a gradual rotation of the axes of polarization over a relatively long distance, there would not be a significant power transfer between the polarization modes because the resultant polarization vector would merely follow the gradual shift in the axes of polarization, and substantially maintain its position relative thereto. In the embodiment shown, the boundaries, represented by the dashed lines 40, 42, in Figure 2(a) are located at the edges of the surface 18, and thus, are spaced at one-half the beat length. In other embodiments, the boundaries could be spaced at other distances.

Figures 2(b)-2(e) show how these abrupt boundaries 40, 42, in the fiber 24 cause power transfer. The electric field vector for the X-polarization mode (which corresponds to the X axis of polarization in a birefringent fiber) is labeled X in the unstressed region and X' in the stressed region 30. Similarly, the electric field vector for Y-polarization mode (which corresponds to the Y-axis of polarization) is labeled Y in the unstressed region, and Y' in the stressed region 30. It will be understood that the X and X' vectors (Figs. 2(b)-(e)), correspond to the X and X' axes (Figure 3) of polarization, respectively, and the Y and Y' vectors (Figs. 2(b)-(e)) correspond to the Y and Y' axes (Figure 3) of polarization, respectively.

In Figure 2(b) the input light is represented by the vector 48 as entering the fiber 24 with all power in the X polarization mode. This polarization is maintained as the light propagates up to the boundary 40 at the beginning of the stressed region 30.

Figure 2(c) shows the power components after the light has propagated just beyond the boundary 40 into the stressed region 30. At the boundary 40, the axes of polarization X and Y abruptly shift through an angle θ (Figure 3) to a new orientation X' and Y', as discussed above in reference to Figure 3. These new polarization mode axes X' and Y' represent the orientations of the electric field vectors for the electromagnetic light waves traveling in these polarization modes. As in the X and Y orientation case, the light in the X' mode travels at a different velocity than the light in the Y' mode, since that is fundamental to the concept of birefringence. The overall polarization of the light then is the resultant vector based upon the components of power in the X' and Y' or X and Y axes.

-8-

0190922

It will be noted that in the stressed region 30, there first appears at the boundary 40 a component of power in the Y' polarization mode whereas before the boundary 40 there was no power in the Y mode. The reason for this stems from Maxwell's equations which are well known mathematical relationships which explain the behavior of electromagnetic fields at boundaries. A fundamental principle is that, at an abrupt boundary through which an electromagnetic field passes, the orientation and magnitude of the electric field vector, relative to a fixed observer, must be the same on either side of the boundary. In this case, the resultant polarization, i.e., the orientation of the electric field vector to the left of the boundary 40, is as shown by the vector 48 in Figure 2(b). To the right of the boundary 40, the polarization axes X' and Y' are shifted so that in order to maintain the resultant polarization for the vector 48, there must be a small Y' component because X' is shifted from its orientation in the X mode. Thus, some power is transferred from the X mode into the Y' mode at the boundary 40.

As the two Y' and X' components travel through the stressed region 30 they shift in relative phase by 180 degrees because the stressed region is one-half beat length long. The relative phase of the X' and Y' components at the left of the boundary 42 is as shown in Figure 2(d). The 180 degree phase shift is modeled by reversing the direction of the Y' component. The same result would be obtained if the 180° phase shift was modeled by reversing the direction of the X or X' vector and leaving the Y or Y' vector unchanged. As a consequence of this 180° phase shift, the resultant polarization vector 50 is shifted from the orientation of the vector 48.

At the boundary 42, the orientation of the polarization axes X' and Y' abruptly shifts back to the original orientation X and Y by virtue of the removal of stress. As the light travels across the boundary 42, the polarization represented by the vector 50 must be preserved. The situation to the right of the boundary 42, at the beginning of the region 34, is as shown in Figure 2(e). However, because the shifting of the axes of polarization cause a concomitant shift in the direction of the component vectors representing power in the X and Y modes, the magnitude of the X and Y components must change to preserve the angle and magnitude of the overall electric field vector 50. By comparing Figures 2(b) and 2(e), it will be noted that the region 30, has caused a substantial increase in the magnitude of the Y component of power.

The system can be characterized mathematically as follows. Typically, for highly birefringent fiber, light propagating down one of the axes will not couple appreciably to the other axis. It has been demonstrated that an additional birefringence can be induced by applying pressure to the fiber. This birefringence is given by

$$\Delta n_p = \frac{an^3 Cf}{2d} \qquad (1)$$

where a is a constant equal to 1.58 for round fiber, n is the mean refractive index of the fiber, C is a piezo-optical (or photoelastic) coefficient, f is the force per unit length applied to the fiber and d is the fiber cladding diameter. In calculations, the values n = 1.46, C = 5 x $10^{-12}$ (MKS), and d = 65 μm were used. For small forces the additional birefringence can be treated as a perturbation to the fiber's normal birefringence. The first order result of the perturbation of birefringence is rotation of the fiber's original axes of birefringence through a small angle θ. This small shift in birefringence does not significantly change the magnitude of the total fiber birefringence, Δn. The angle θ is given by

$$\tan(2\theta) = \frac{\Delta n_p \sin(2\phi)}{\Delta n_i + \Delta n_p \cos(2\phi)} \qquad (2)$$

Where $\phi$ is the angle at which the pressure is applied with respect to the fast axis (i.e., the Y axis in Figure 2); $\Delta n_i$ is the intrinsic birefringence of the fiber; and $\Delta n_p$ is the induced birefringence as calculated in Equation (1).

Light originally polarized along the X axis will decompose into components polarized along the axes X' and Y' when entering a squeezed region. The relative phase of the light in the two polarizations will change by $\pi$ radians in one-half beat length (i.e., L/2). If at this distance the force on the fiber is removed, the light will decompose back into components along the original axes with an amount $\cos^2(2\theta)$ in the X polarization and $\sin^2(2\theta)$ in the Y polarization.

Further background relating to the effect of fiber stress on fiber polarization and the resulting coupling between the polarization modes of light within the fiber is provided by the following papers:

Birefringent Fiber Polarization Coupler, by R.C. Youngquist, J.L. Brooks and H.J. Shaw, Optics Letters, Vol. 8, pp. 656-658 (1983).

Two Mode Fiber Modal Coupler, by R.C. Youngquist, J.L. Brooks and H.J. Shaw, Optics Letters, Vol. 9, No. 5, pp. 177-179, (1984).

Active Polarization Coupler For Birefringent Fiber, by J.L. Brooks, R.C. Youngquist, G.S. Kino and H.J. Shaw, Optics Letters, Vol. 9, No. 6, pp. 249-251, (1984)

From the preceding analysis, it will be recognized that, if the direction of stress, that is, the force F of Figures 2(a) and 3, is parallel with either of the unstressed polarization axes, that is, the X and Y axes of Figure 3, the application of additional stress to the fiber will not couple light from one polarization mode to another. As will be seen in the following description, this fact is used in the present invention to accurately determine the orientation of the unstressed axes X and Y (Figure 2) of birefringence of the fiber at a particular point along its length.

Referring specifically to Figure 4, the apparatus used for locating the birefringent axes is shown. In this arrangement, the output from a helium neon laser 60 is linearly polarized along one of the birefringent axes, X or Y (Figure 3), of a high birefringence fiber 24 through the use of a properly oriented polarizer 62. A lens 64 applies this light to one end of the fiber 24. A short length of the fiber 24 is squeezed between a flat block 66 having a surface 10 and a curved cylindrical block 68 having a surface 18. This cylindrical surface 18 on the element 68 is used to provide a relatively large pressure on the fiber within a short length, typically shorter than one millimeter, without breaking the fiber. While the stress resulting from the curved surface 18 of the block is not identical to that described with reference to the ridged block of Figure 2(a), the function is similar. Thus, so long as the curved surface 18 (Figure 4) provides stress in the fiber 24 through a fiber length which is not equal to a multiple of the beat length, and as long as the stress is not aligned with a natural axis X or Y, the surface 18 will cause a transfer of some power between the polarization modes.

The pressure applied by the surfaces 10 and 18 is modulated by a small amount using a piezoelectric transducer 70 driven by a signal generator 72. A polarizer 74 and lens 76 are used to select the linear polarization component orthogonal to the input polarization provided by the polarizer 62, for detection by a detector 78 and analysis by a spectrum analyzer 80. Thus, for example, if the polarizer 62 applies light from the laser 60, exclusively in the X polarization mode of Figure 3, the polarizer 74 will select the Y polarization mode for detection by the detector 78 in order to determine what portion of light has been coupled from the X to the Y polarization modes at the location of stress. The spectrum analyzer 80 is used to detect the output of the detector 78 at the modulation frequency of the generator 72, thus assuring that the only mode transfer which is analyzed is that which is induced by the curved surface 18.

Those skilled in this art will recognize that a lock-in amplifier may be used in place of the spectrum analyzer 80 to provide additional dynamic range with less noise, while still providing the desired frequency selection.

Figure 5 is a graph of the detected output from the spectrum analyzer 80 as a function of the direction of the applied stress on the fiber 24. In this regard, referring again to Figure 4, if the cylindrical block 68 is moved in a direction into or out of the figure in Figure 4 relative to the flat block 66, the fiber 24 will be caused to roll about its longitudinal axis as the stress is applied to the fiber. Thus, the direction of application of the lateral force will be changed and the output from the spectrum analyzer 80 can be monitored as a function of fiber orientation.

As shown in Figure 5, the detected output from the spectrum analyzer 80 includes two minima, in this case at 30 degrees and 120 degrees, but in any case, at locations that are 90 degrees separated. It has been found that the sharper minima, such as that shown at 120 degrees in Figure 5, occurs when the slow axis is aligned with the direction of the force. This is believed to occur because the applied stress tends to cancel the residual birefringence at the slow axis, thus amplifying the effect of the small modulation. At this sharp minimum, a resolution of better than one degree is achievable. Once the slow axis has been identified within a resolution of one degree, the fast axis, which is 90 degrees rotated from the slow axis, can also be located with this accuracy.

- 14 -

0190922

WE CLAIM:

1. Apparatus for locating the birefringent axes of an optical fiber, characterized by comprising:

a light source (60) for introducing light of a first polarization into said fiber (24);

means (66) for applying a lateral stress at a point along the length of said fiber (24) where said axes are to be located;

means (68) for changing the direction of said lateral stress; and

means (78) for monitoring the effect of said stress as a function of said changing direction to identify the location of said axes.

2. Apparatus as claimed in Claim 1, characterized in that said applying means comprises:

a pair of surfaces (10, 18) positioned on opposite sides of said fiber (24) for pressing against said fiber to stress said fiber in a lateral direction, said surfaces being relatively moveable to change said lateral direction.

3. Apparatus as claimed in Claim 2, characterized in that one of said surfaces (10) is flat and the other of said surfaces (18) is curved.

4. Apparatus as claimed in Claim 3, characterized in that the axis of said curved surface (18) is normal to the axis of said fiber.

5. Apparatus as claimed in any of Claims 2 to 4, characterized by additionally comprising:

means (70) for vibrating one of said pair of surfaces toward the other of said pair of surfaces to modulate the stress in said fiber in said lateral direction at a modulation frequency.

6. Apparatus as claimed in Claim 5, characterized in that said monitoring means comprises means (80) for selecting light at said frequency for polarization monitoring.

7. Apparatus as claimed in any of Claims 1 to 5, characterized in that said monitoring means comprises:

means (60, 62) for illuminating one end of said optical fiber with light having a polarization which is aligned with one of the natural birefringent axes of said optical fiber; and

means (74, 76) for monitoring light at the other end of said optical fiber having a polarization orthogonal to said one of said natural birefringent axes of said fiber.

8. A method of locating the birefringent axes of an optical fiber (24), characterized by comprising:

1) injecting light at a first location along said fiber at a first polarization;

2) laterally stressing said fiber;

3) monitoring the light at a second location along said fiber at a second polarization;

4) rotating the direction of said lateral stressing of step (2); and

5) repeating steps (1) through (4) to locate a direction of lateral stress which provides a predetermined amount of light in step (3).

9. A method as claimed in Claim 8, wherein said predetermined light of step (5) is a minimum amount of light at said second polarization.

10. A method as claimed in Claim 8 or 9, characterized in that said laterally stressing step comprises squeezing said fiber at a localized area along the length of said fiber between a pair of surfaces.

11. A method as claimed in any of Claims 8 to 10, characterized in that said rotating step comprises translating said surfaces relative to one another to roll said fiber between said surfaces.

12. A method as claimed in any of Claims 8 to 11, characterized in that said laterally stressing step comprises applying a modulated stress to said fiber at a predetermined frequency.

13. A method as claimed in any of Claims 8 to 12, characterized in that said monitoring step comprises monitoring said light at said predetermined frequency.

1/2

0190922

Fig. 1

$d_x$ core

$dy$ core

$d$ cladding

24b

24a

24

Fig. 2a

F

14

FIBER

X

Y

36

40

18

STRESSED

10

30

42

24

X

X

Y

Y

X

48

Fig. 2b

Fig. 2e

X

50

Y

X'

X'

Fig. 2d

48

50

Y'

Y'

Fig. 2c

F

18

X'

X

φ

Y

θ

24

Y'

Fig. 3

10

2/2

0190922

Fig. 4

Fig. 5